# EUROPEAN PATENT APPLICATION

(11) **EP 3 579 100 A1**
(43) Date of publication of application: **11.12.2019**
(21) Application number: 18747436.6
(22) Date of filing: 25.01.2018
(51) Int. Cl.: G06F 8/30, B25J 9/16

(54) **APPARATUS AND METHOD FOR SKILL-BASED ROBOT PROGRAMMING**

(30) Priority: 03.02.2017 KR 20180015715
(71) Applicant: DOOSAN ROBOTICS INC, Gyeonggi-do 16648 (KR)
(72) Inventor: HAN, Seong Il, Seoul 07598 (KR)
(74) Representative: Stöckeler, Ferdinand
(86) International application number: PCT/KR2018/001095
(87) International publication number: WO 2018/143607

(57) **Abstract**

The present disclosure relates to a skill-based robot programming apparatus and method, which provide a necessary skill and task template based on user input information so that a user may easily program the work that a robot should perform, and discloses a skill-based robot programming apparatus including a master DB for storing a work cell item including a robot or a peripheral and having a relevant parameter and a master skill, which is a set of commands for driving the work cell item, a work cell manager for selecting a work cell item to be used among the work cell items stored in the master DB, and inputting a parameter of the selected work cell item, a work cell engine for searching the master skill relevant to the selected work cell item from the master DB, and generating a user skill by applying at least one parameter among the parameters of the selected work cell item to the searched master skill, a user DB for storing the selected work cell item and the user skill, and a task builder for generating a task that the robot should work based on the user skill.

## Description

### [Technical Field]

The present disclosure relates to a skill-based robot programming apparatus and method for generating a program for allowing a robot to perform a specific work, and more particularly, to a skill-based robot programming apparatus and method for providing a necessary skill and task template based on user input information so that the user may easily program the work that the robot should perform.

### [Background Art]

In the industrial field, assembly and production of a product by a robot are gradually increasing, and accordingly, the functions are gradually diversified and advanced even in a system for controlling the robot.

In this robot control environment, various techniques for programming the robot have been proposed in order to allow the robot to perform the work desired by the user, and a conventional method for coding a program by using a machine language that the robot may understand or a low-level language such as c or c++ has made robot programming almost impossible for an ordinary user.

### [Disclosure]

### [Technical Problem]

The present disclosure provides a skill-based robot programming apparatus and method for providing a necessary skill and task template based on user input information so that an ordinary user may easily program the work that the robot should perform.

### [Technical Solution]

A skill-based robot programming apparatus for programming a robot according to an exemplary embodiment of the present disclosure for achieving the object may include a master DB for storing a work cell item including a robot or a peripheral and having a relevant parameter and a master skill, which is a set of commands for driving the work cell item, a work cell manager for selecting a work cell item to be used among the work cell items stored in the master DB, and inputting a parameter of the selected work cell item, a work cell engine for searching the master skill relevant to the selected work cell item from the master DB, and generating a user skill by applying at least one parameter among the parameters of the selected work cell item to the searched master skill, a user DB for storing the selected work cell item and the user skill, and a task builder for generating a task that the robot should work based on the user skill.

Further, the skill-based robot programming apparatus may further include a work cell register for registering the work cell item including the robot or the peripheral and having the relevant parameter and storing the master DB and a skill register for generating or editing the master skill by using the work cell item stored in the master DB, and storing it in the master DB. Here, the relevant parameter of the work cell item may include at least any one among the category of the work cell item, the type of the work cell item, the model of the work cell item, the name, weight, center of gravity, TCP, volume, reference point, turning point, approach point, way point, operation point of the work cell item, and the posture information, speed, acceleration, connection type, connection port, and wait time of the respective points, and the item of the parameter may be set by the work cell register, and the input for a value of the parameter may be performed by at least any one among the work cell register, the work cell manager, and the task builder.

Further, the work cell manager may search the work cell item stored in the master DB so that a user may select the work cell item to be used, and provide a screen so that the user may input the parameter of the selected work cell item, when the user selects the work cell item to be used, the work cell engine may include a skill engine for searching the maser skill relevant to the selected work cell item among the master skills stored in the master DB, and generating the user skill by providing at least some parameters of the parameters of the selected work cell item to the searched master skill and a template engine for generating and recommending a task template, which is a set of the user skills, based on the work cell item and the user skill stored in the user DB, and the task builder may receive the user skill and the task template generated and recommended by the work cell engine, and the user may generate the task by using it as it is by selecting one of the provided task templates, or combining the provided user skills without using the provided task template, or adding the user skill to the selected task template, or deleting, switching, or changing the user skill included in the selected task template by selecting one of the provided task templates. Further, the task builder may combine one or more user skills according to a work order, and generate the task by receiving the position information and posture information of the robot, which is an operation subject, required when performing the one or more user skills through direct teaching or indirect teaching.

Further, the work cell engine may further include a path engine for providing the progress route and posture of a movement-relevant command included in the user skill by utilizing the parameter of the work cell item, the path engine may read the parameter of the selected work cell item, the parameter including reference point information of the selected work cell item and the position information and posture information of at least any one point among a turning point, an approach point, a way point, and an operation point with respect to the reference point, and automatically generate the progress route and posture of the movement-relevant command included in the user skill by measuring the position between the robot that is an operation subject and the reference point of the selected work cell item through direct teaching or indirect teaching to calculate the relative position information and posture information between the robot and at least any one point among the turning point, the approach point, the way point, and the operation point of the selected work cell item.

A skill-based robot programming method using a skill-based robot programming apparatus for programming a robot according to another exemplary embodiment of the present disclosure for achieving the object may include setting a work cell item to be used among the work cell items including a robot or a peripheral and having a relevant parameter, generating a user skill based on the set work cell item, and generating a task that the robot should work based on the user skill.

More specifically, the setting the work cell item to be used may include searching for the work cell item stored in a master DB, and selecting the work cell item to be used among the searched work cell items, inputting a parameter of the selected work cell item, and storing the selected work cell item and the input parameter in a user DB, and additionally, may further include testing an operation of the selected work cell item. Further, the method may further include generating a task template capable of recommending upon robot programming of a user based on the work cell item and the user skill stored in the user DB.

Further, the generating the user skill based on the setting of the work cell item to be used may include searching a master skill relevant to the set work cell item from a master DB and generating a user skill by applying at least one of the parameters of the set work cell item to the master skill relevant to the work cell item, and here, the parameter relevant to the selected work cell item may include at least one among the category of the work cell item, the type of the work cell item, the model of the work cell item, the name, weight, center of gravity, TCP, volume, reference point, turning point, approach point, way point, operation point of the work cell item, and the posture information, speed, acceleration, connection type, connection port, and wait time of the respective points.

Further, the parameter of the selected work cell item may include a reference point and at least any one among a turning point, an approach point, a way point, and an operation point with respect to the reference point, the inputting the parameter of the selected work cell item may include setting the position information of the reference point by measuring the position between the robot, which is an operation subject, and the reference point of the selected work cell item through direct teaching or indirect teaching and setting the relative position information and posture information between at least any one point among the turning point, the approach point, the way point, and the operation point and the robot by calculating the relative position information and the posture information between the robot and at least any one point among the turning point, the approach point, the way point, and the operation point of the selected work cell item based on the position information of the reference point set by a path engine, and the generating the user skill based on the selected work cell item may include automatically generating the progress route and posture of a movement-relevant command included in the user skill based on the relative position information and the posture information between at least any one point among the set turning point, approach point, way point, and operation point and the robot.

Further, the generating the task that the robot should work based on the user skill may include generating the task by using it as it is by selecting one of the provided task templates, or combining the provided user skills without using the provided task template, or adding the user skill to the selected task template, or deleting, switching, or changing the user skill included in the selected task template by selecting one of the provided task templates, and here, the task may be configured by arranging a plurality of user skills in a work order.

Further, the above-described robot programming method may be stored in a computer-readable recording medium in the form of a computer program and executed in a computer.

### [Advantageous Effects]

According to the robot programming apparatus and method according to the present disclosure,
Firstly, it is possible to constitute a skill, which is the minimum unit of the programming based on the work cell item and the relevant parameters, which are composed of the objecting robot and the peripheral devices that collaborate with the robot,
secondly, it is possible to help the user to easily program the robot by recommending the skill and the task template that may be used based on the selected work cell item, when the user selects the work cell item necessary for realizing the work content in the master DB,
thirdly, it is possible to allow the user to program the robot only with the arrangement of the skill and the simple teaching even if the user is not a low-level language expert,
fourthly, it is possible to generate a new robot work by only a slight change based on the robot work that was previously programmed.

### [Description of Drawings]

FIG. 1 is a block diagram briefly showing a main configuration of a robot programming apparatus according to an exemplary embodiment of the present disclosure.
FIG. 2 is a diagram showing an example of a master skill generated by a skill register 200.
FIG. 3 is a flowchart for a work cell manager 300 according to an exemplary embodiment of the present disclosure to store work cell items and relevant parameters to be actually used in a work cell DB of a user DB 700.
FIGS. 4A to 4H are diagrams showing the work cell manager 300 for displaying a screen on a display 800 so that the user according to an exemplary embodiment of the present disclosure selects work cell items, and inputs parameter items relevant to the selected work cell item.
FIG. 5 is a flowchart briefly showing an operation of a skill engine according to an exemplary embodiment of the present disclosure.
FIG. 6 is a diagram showing an exemplary embodiment in which the skill engine automatically generates a user skill.
FIG. 7 is a diagram showing the function of a path engine in a CNC 430 according to an exemplary embodiment of the present disclosure.
FIG. 8 is a diagram showing a procedure in which a task builder 500 according to an exemplary embodiment of the present disclosure generates a task.
FIG. 9 is a diagram showing an example of a task template recommended by a template engine in the task builder 500.
FIG. 10 is a flowchart showing a skill-based robot programming method according to an exemplary embodiment of the present disclosure.
FIG. 11 is a flowchart for a skill-based robot programming apparatus according to an exemplary embodiment of the present disclosure to set the work cell item to be used.

### [Best Mode]

In order to clearly illustrate the present disclosure, parts not related to the description are omitted, and the same or like parts are denoted by the same reference numerals throughout the specification.

Throughout this specification, it will be understood that when an element is referred to as being "connected" to another element, it may be "directly connected" to the other element or "electrically connected" to the other element with other elements interposed therebetween. It will be further understood that when an element is referred to as "comprises" another element, the element is intended not to exclude other elements, but to further include other elements, unless the context clearly indicates otherwise.

When it is described that any one part is "on" the other part, it may mean that the part is directly on the other part or any other part is interposed therebetween. On the contrary, when it is described that any one part is "directly on" the other part, there is no other part interposed therebetween.

The terms "first," "second," "third" and the like are used to illustrate different parts, components, areas, layers and/or sections, but are not limited thereto. The terms are only used to differentiate a certain part, component, area, layer or section from other part, component, area, layer or section. Accordingly, a first part, component, area, layer or section, which will be mentioned hereinafter, may be referred to as a second part, component, area, layer or section without departing from the scope of the present disclosure.

The terminology used herein is for the purpose of describing particular embodiments only and is not intended to limit the present disclosure. As used herein, the singular forms are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, and/or components.

Terms "below", "above", and the like indicating a relative space may be used to more easily describe a relationship between one part illustrated in the drawings with another part. These terms are intended to include other meanings or operations of a device that is being used, in addition to meanings intended in the drawings. For example, when the device in the drawing is inverted, any parts described as being "below" other parts may be described as being "above" the other parts. Accordingly, the exemplary term "below" includes both of an upper direction and a lower direction. The device may rotate by 90° or other angles, and the terms indicating a relative space are also interpreted according thereto.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be additionally interpreted as having a meaning that is consistent with their meaning in the context of the relevant art and/or the present disclosure, and will not be interpreted in an idealized or overly formal sense unless expressly so defined herein.

The horizontal direction mentioned below means a direction parallel to the ground and the vertical direction means a direction perpendicular to the horizontal direction. Further, the lower end means the part that goes down when installed and the upper end means the part that goes up when installed.

Hereinafter, exemplary embodiments of the present disclosure will be described in detail with reference to the accompanying drawings so that those skilled in the art to which the present disclosure pertains may carry out easily. The present disclosure may be implemented in various different forms and is not limited to the embodiments described herein.

Before describing the present disclosure in detail, key terms are first defined.

A work cell may be generally referred to as a logical and strategic resource arrangement organized to improve a process flow, increase efficiency, and remove waste and the present disclosure provides an apparatus and a method for programming an operation of a robot disposed in a work cell.

Various resources may be disposed in the work cell and in the present disclosure, this resource may be referred to as a work cell item. Not only may the robot itself be a single work cell item, but also each of peripherals that collaborate with the robot may be a single work cell item. Although described later, the work cell item may embed parameters, and the work cell item may be stored in the work cell DB of a master DB and/or a user DB along with the embedded relevant parameter.

Further, the peripherals that may be the work cell item may be classified into the following five types according to a method for affecting the operation of the robot.

A first type is an end effector, which is a work cell item that may be attached to the end of the robot to change the position or the state of the part described later, and the posture or the position of the robot based on a Tool Center Point (TCP), which is a center point, may be changed. The peripherals such as a gripper, a gluing tool, and a screw driver may be included here.

A second type is a feeder, which is a work cell item in which the end effector may pick up a target workpiece or place a finished target workpiece thereon, and a reference point, a picking point indicating the position of picking the target workpiece, a placing point indicating the position of placing the finished workpiece, a feeder approach point, etc. may be stored together as a parameter in the work cell DB of the master DB and/or the user DB. A pallet or conveyor may be included in the feeder.

A third type is a device, which is a work cell item in which the robot interacts with a part described later through the end effector, and a reference point, an operation point, an approach point, etc. may be stored together as a parameter in the work cell DB of the master DB and/or the user DB. A CNC, a machine tool, a press, an air blower, etc. may be included in the device.

A fourth type is a part, which is a target workpiece of the robot, that is, a target that may be picked up or moved by the end effector, and the volume, height, etc. may be stored together as a parameter in the work cell DB of the master DB and/or the user DB. It also interacts with the feeder or the device and the operation of the end effector may be affected by the relevant parameter.

A fifth type is a sensor, which is work cell items that may monitor the operation of the robot, and affect an operation of the robot due to its monitoring result. A proximity sensor, a vision sensor, etc. may be included here.

The above-described work cell items may be defined as one category by grouping the similar ones. As an exemplary embodiment, each of the above-described five types of work cell items may be defined as one category. Further, the device may be defined as a more subdivided category such as a machine, a peripheral, and equipment.

Table 1 below shows an example of the work cell items and the relevant parameters.

**Table 1**

| Large Classification | Medium Classification | Manufacturer | Model Name | Command | Output |
|---|---|---|---|---|---|
| Pneumatic gripper | 3 Jaw | Schunk | PZN 80 | Grasp Release Fail | Grasp Ind. Release Ind. |
| | 2 Jaw | SMC | MHZ2-32D | Grasp Release Fail | Grasp Ind. Release Ind. |
| Electric gripper | 2 Jaw | SMC | LEHZ32K2-22-R51P1 | Grasp# 1 | Grasp#1 Ind. |
| | | | | Grasp#2 | Grasp#2 Ind. |
| | | | | Grasp#3 | Grasp#3 Ind. |
| | | | | Release | Release Ind. |
| Screw driver | Electric controller | Atals Copco | Power Focus | Torque OK | Tool On |
| | | | | Torque NOT | |
| Gluing Tool | Pneumatic valve | Innohitek | IHV-2000 | | Tool On |
| | | | | | Tool Off |

The skill is a set of commands for driving the work cell items stored in the work cell DB of the master DB and/or the user DB and is a minimum unit that the user may use in programming the robot operation. In more detail, the work cell items may be stored together in the work cell DB of the master DB and/or the user DB together with the embedded relevant parameters, and the skill may be produced by applying the parameter relevant to the progress route of the work cell item to a combination of the commands of the work cell items in order to perform a specific work. For example, the gripping function of the gripper, door open/door close of the CNC, picking, placing, etc. may be defined as one skill, respectively.

A task represents a work that the robot should perform, and the task may be configured by arranging a plurality of skills in a work order. That is, the task may be a set that arranges the plurality of skills in the work order. As an exemplary embodiment, when the robot performs the auxiliary work for assisting the CNC, one task may be configured by arranging 'picking a palette,' 'door open,' 'placing a workpiece,' 'door close,' 'picking the workpiece,' and 'placing the palette', in which each is one skill, n the work order performed by the robot.

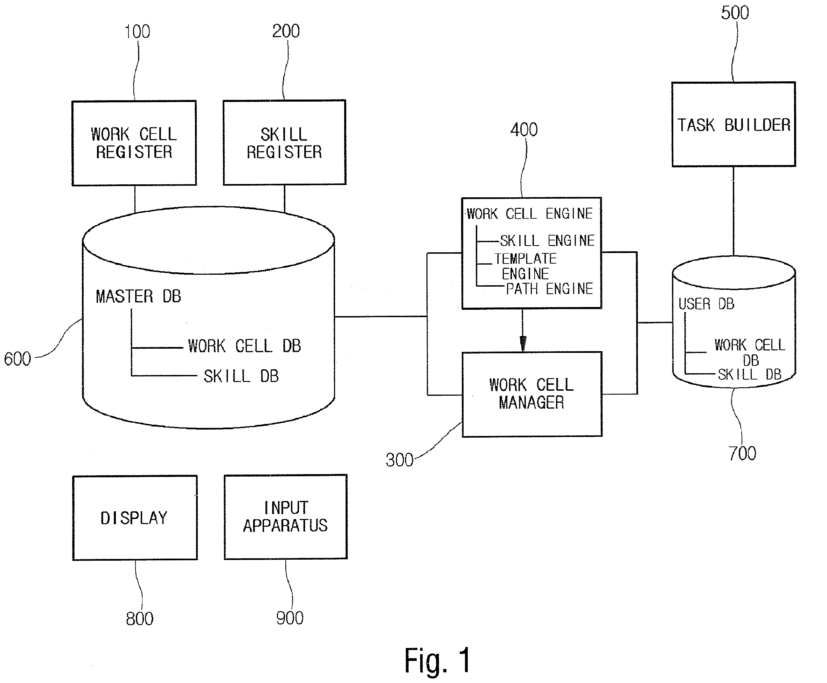

FIG. 1 is a block diagram briefly showing a main configuration of a robot programming apparatus according to an exemplary embodiment of the present disclosure.

Referring to FIG. 1, a robot programming apparatus according to an exemplary embodiment of the present disclosure may include a work cell register 100, a skill register 200, a work cell manager 300, a work cell engine 400, a task builder 500, a master DB 600, and a user DB 700.

Here, the master DB 600 and the user DB 700 may be configured with a work cell DB and a skill DB, and the work cell item and the relevant parameters embedded in the work cell item described above may be stored in the work cell DB and the above-described skill may be stored in the skill DB. Further, although the master DB 600 and the user DB 700 have been shown as separate configurations, they may also be configured by dividing one DB in a single hardware. Likewise, the work cell DB and the skill DB may also be composed of a single DB.

Further, a display 800 and an input apparatus 900 may be further provided to provide an interface between the user and the robot programming apparatus. The display 800 may be an LCD monitor connected with a computer, a teaching pendant screen, or the screen of a mobile device such as a smartphone, and the input apparatus 900 may be a keyboard, a mouse, a touch screen, etc. Further, like the screen of the touch screen, the display 800 and the input apparatus 900 may be configured together in a single apparatus.

The work cell register 100 is an apparatus capable of registering a work cell item and a relevant parameter by an expert. More specifically, the work cell register 100 may register the work cell item and the parameter item embedded in the work cell item. Of course, it is also possible to set the parameter by describing at least some contents of the parameter items. The work cell item and the relevant parameter item may be in plural, and at least any one among the category of the work cell item, the type of the work cell item, the model of the work cell item, name, weight, center of gravity, TCP, volume, reference point, turning point, approach point, way point, and operation point of the work cell item, and the posture information, speed, acceleration, connection type, connection port, and wait time of respective points may be included as the parameter item. The work cell register 100 may register the work cell item and the relevant parameter item, and further, may additionally register the value of each item with respect to a part or all of the parameter items. The work cell item and the relevant parameter registered through the work cell register 100 may be stored in the work cell DB of the master DB 600. The registration of the work cell item through the work cell register 100 may be performed by a work cell item manufacturer or an expert. That is, the registration of the work cell item and the relevant parameter may be performed by the expert who has considerable knowledge about the work cell item (peripheral device or robot) to be registered, rather than the user of the robot programming apparatus proposed in the present disclosure. Since the work cell item, the relevant parameter item, and additionally the value of each parameter item should be registered together, the professional knowledge related to the work cell item is required.

The robot itself may also be registered as a work cell item through the work cell register 100. Further, when the structure and characteristics of the robot are different, different robots may be separately registered and stored separately in the work cell DB of the master DB 600. That is, robots having different product names delivered from the company may be separately registered in the work cell register 100, respectively and stored as different work cell items in the work cell DB of the master DB 600.

Further, the registration of the work cell item by the work cell register 100 may be performed based on the product-related manual acquired from the manufacturer. That is, the parameter items and/or the values of the respective parameter items such as bibliographic information, specification information, workable condition, command word, avoidance point, target point, optimum path, connection method, and/or output information of each work cell item may be extracted by the manual to be stored in the work cell DB of the master DB 600.

The skill register 200 is an apparatus for generating, editing, and registering a skill, which is a combination of commands for driving the work cell item stored in the work cell DB of the master DB 600. The skill generated at this time may be referred to as the master skill by distinguishing it from the user skill described later.

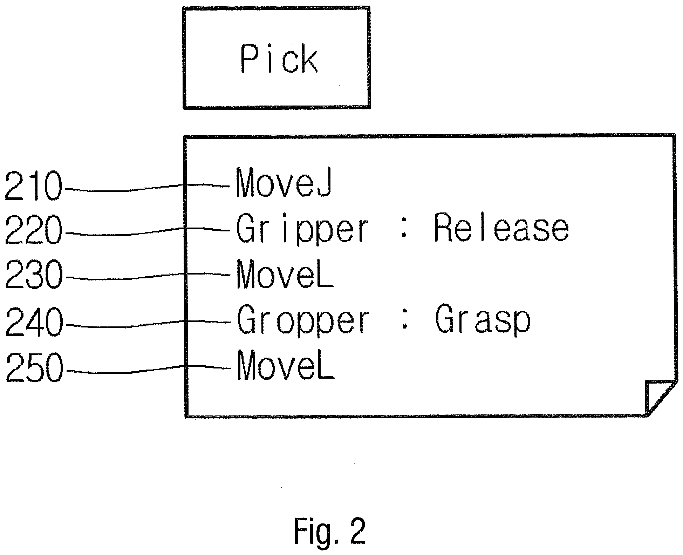

FIG. 2 is a diagram showing an example of the master skill generated by the skill register 200.

Referring to FIG. 2, a skill 'pick' may be a skill that performs picking according to the command order of MoveJ 210, 'Gripper:Release 220', MoveL 230, 'Gripper:Grasp 240,' and MoveL 250. The MoveJ 210 and the MoveL 230, 250 may be movement commands of the robot, and the 'Gripper:Release 220' and 'Gripper:Grasp 240' may be commands for opening or closing the gripper that is the end effector of the robot. That is, in order to pick a target workpiece, it goes to a position where the target workpiece is disposed, and picks the target workpiece by opening and then closing the gripper. As described above, if the robot programming is performed by using a machine language command for the work cell item, the user may feel a considerable difficulty, but the user may easily program the robot even without the knowledge for the machine language capable of directly controlling the robot by using the skill given a name that the user may easily recognize by integrating them.

The master skill generated and edited by the skill register 200 may be stored in the skill DB of the master DB 600.

The generation and editing of various master skills by using the skill register 200 may be performed in advance by the robot programming expert in the robot manufacturer. That is, the robot programming expert may generate and edit various master skills that may drive various work cell items stored in the work cell DB of the master DB 600 to store them in the skill DB of the master DB 600.

As described above, the work cell register 100 and the skill register 200 of the robot programming apparatus provided in the present disclosure may register various robots and various peripherals as work cell items by the manufacturer rather than the user of the robot programming apparatus, and may be generally used in registering the master skill based on the command of the registered work cell item. The work cell item and the master skill registered by the work cell register 100 and the skill register 200 may be stored in the master DB 600. Further, the user may easily program the robot by using the work cell items and the master skills previously stored in the master DB 600. Accordingly, the work cell register 100 and the skill register 200 may be additional modules that are not required for robot programming from the user position of the robot programming apparatus.

As described above, various types of work cell items and master skills may be stored in the master DB 600. Since the work cell item and the master skill stored in the master DB 600 have been registered and stored by the manufacturer considering a plurality of users who variously use different work cell items, they may also include the work cell item and the skill not used actually by a specific user additionally.

The work cell manager 300 may set the parameter value of the work cell item for programming the operation of the robot in the work cell actually used by the user. The work cell manager 300 searches the work cell items stored in the master DB 600 to display them on the screen of the display 800 so that the user may select the work cell items to be used among the work cell items stored in the master DB 600, and when the user selects the work cell item to be used, the screen capable of inputting a value for the parameter item of the selected work cell item may be provided to set the parameter of the selected work cell item.

At this time, the work cell manager 300 may recommend a work cell item suitable for performing the work contents of the user to the user so that the user may select it, or notify the user of all the work cell items stored in the master DB 600 so that the user may select it among them.

The work cell manager 300 may receive the parameter values related to the selected work cell item and may be stored in the work cell DB of the user DB 700. That is, the work cell manager 300 may only read data related to the work cell item from the master DB 600 and may not change the data in the master DB 600. The work cell item set by the work cell manager 300 may be stored in the user DB 700 rather than the master DB 600.

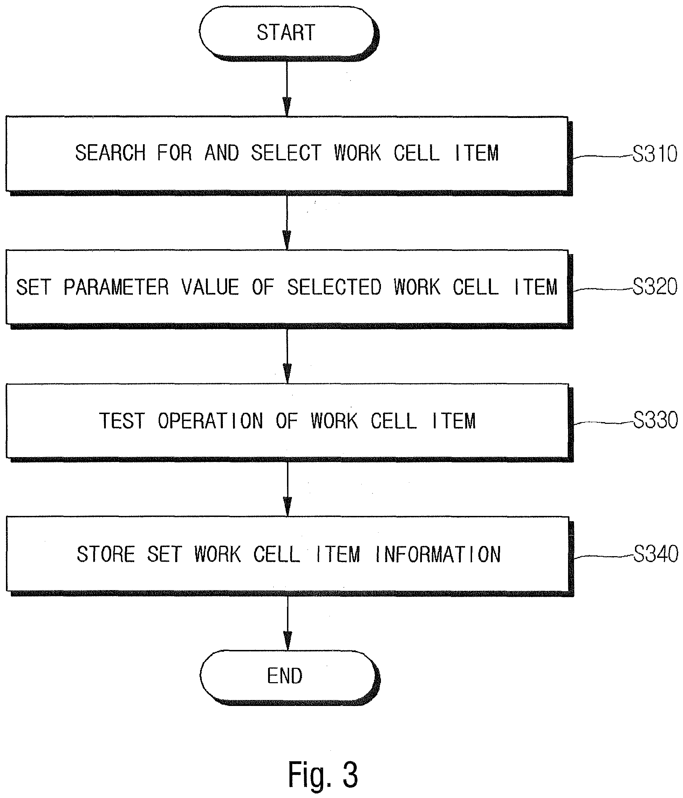

FIG. 3 is a flowchart for the work cell manager 300 to store the work cell item and the relevant parameters to be actually used in the work cell DB of the user DB 700 according to an exemplary embodiment of the present disclosure.

Referring to FIG. 3, the work cell manager 300 may search for the work cell item stored in the master DB 600, and select a necessary work cell item (operation S310). That is, the work cell manager 300 may display the work cell items stored in the master DB 600 on the screen of the display 800. At this time, it may show by classifying them into categories such as a tool, a peripheral, and a machine.

The user may select the work cell item necessary for the robot work contents to be programmed among the work cell items displayed on the screen of the display 800 by the work cell manager 300. Further, the user may set the parameter relevant to the work cell item selected according to the robot work environment (operation S320). That is, the work cell register 100 may register the work cell item and the relevant parameter item to store them in the master DB 600 together, and the work cell manager 300 may input and set the value of the parameter item relevant to the work cell item. At this time, the work cell manager 300 may also set a value for all the parameter items relevant to the selected work cell item, or use the value, which has been set by being inputted through the work cell register 100, for some parameter items as it is and set a value only for some other parameter items.

As described above, after selecting a single work cell item, and setting the parameter relevant to the selected work cell item, an operation test of the work cell item may be performed (operation S330). That is, it is possible to check whether the set parameter has been set according to the work environment, and whether the command has been executed according to the set input/output port. If it does not operate correctly as desired according to the test, it is possible to return to the previous operation to correct the setting, and if it operates correctly as desired, the set work cell item may be stored in the user DB 700 (operation S340). The work of selecting the work cell item and setting the relevant parameter in the above-described work cell manager 300 may be repeatedly performed.

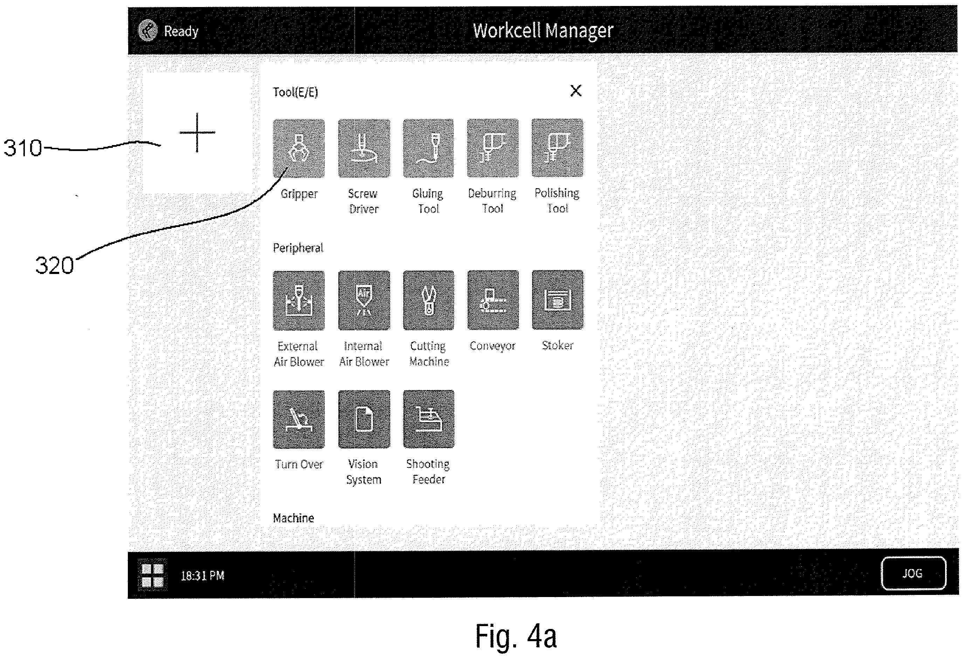

Hereinafter, an example in which the user selects the work cell item and sets the relevant parameter item in the work cell manager 300 will be described in more detail with reference to FIGS. 4A to 4H.

FIGS. 4A to 4H are diagrams showing the work cell manager 300 for displaying a screen on the display 800 so that the user according to an exemplary embodiment of the present disclosure selects the work cell item, and inputs the parameter items relevant to the selected work cell item.

As an exemplary embodiment, it is possible to consider a situation where the robot programs so as to perform the CNC auxiliary work. That is, the robot may pick a target workpiece to supply it to the CNC in order to assist the CNC to work with the target workpiece, and bring the target workpiece whose work has been completed from the CNC to place it on the pallet. The user may select the gripper as the work cell item for this robot work.

Referring to FIG. 4A, the work cell manager 300 may display an icon corresponding to all the work cell items stored in the work cell DB of the master DB 600 on the screen of the display 800. In this case, the work cell manager 300 may classify the icons corresponding to all the work cell items stored in the master DB 600 by category to display them on the screen of the display 800. The category may be set as the relevant parameter item of the work cell item, and input at the time of registering the work cell item through the work cell register 100 to be stored in the work cell DB of the master DB 600 together with the work cell item. An exemplary embodiment of FIG. 4A shows that a gripper, a screw driver, a gluing tool, a deburring tool, a polishing tool, etc. are stored as a tool for the end effector of the robot, and an air blower, a cutting machine, a conveyor, etc. are stored as the peripherals. On the screen of FIG. 4A, the user may select by first pressing a + icon 310, and then pressing a gripper icon 320 in order to indicate adding a new work cell item for selecting the work cell item.

After selecting the work cell item, the work cell manager 300 may display the relevant parameter items stored in the work cell DB of the master DB 600 on the screen of the display 800 together with the selected work cell item so that the user may input and set the information on the selected work cell item (operation S320).

Generally, the parameter items that may be set for each work cell item may be different, and the parameter items may be divided into a plurality of groups. As an example, the work cell item attached to the TCP of the robot may be set by dividing the parameter item into a General group, an input/output (I/O) group, a TCP group, etc., and may be input and set the parameter value by using a separate screen for each group.

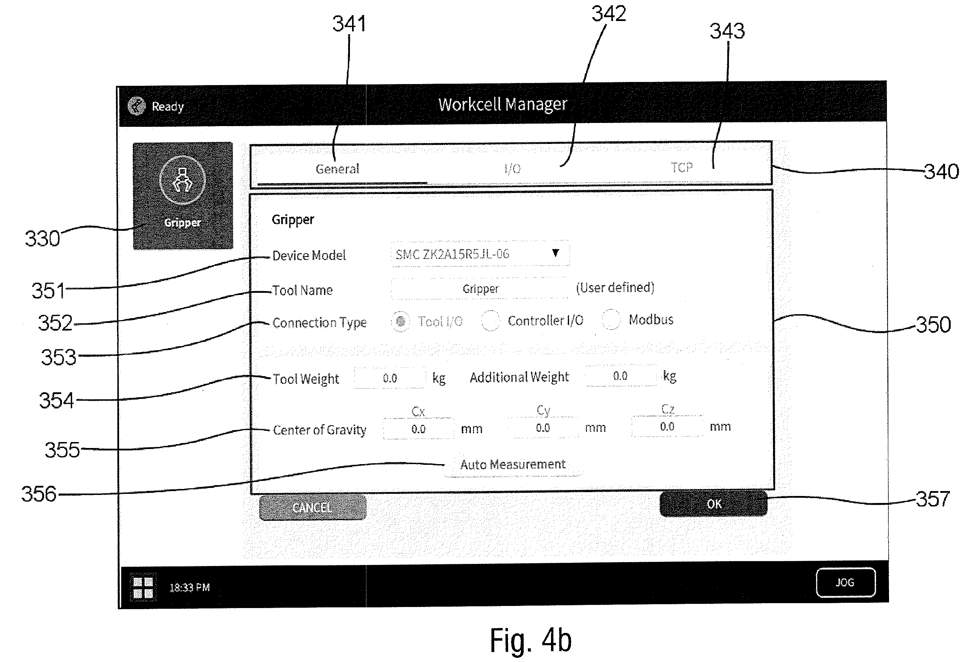

FIGS. 4B to 4D are diagrams showing the contents displayed on the screen of the display 800 in order to input and set the parameter item of the gripper.

Referring to FIGS. 4B to 4D, the work cell manager 300 may display the gripper icon 330 at one corner of the screen of the display 800 in order to indicate that it is a gripper-relevant parameter setting. Further, the gripper relevant parameter item may be divided into three groups of a General group, an input/output (I/O) group, and a TCP group. The work cell manager 300 may display the group name (the General 341, the I/O 342, the TCP 343) at the upper end 340 of the screen of the display 800 in order to set the value of the parameter item included in each group and display the parameter item included in each group on the lower end 350. The user may press the group name at the upper end 340 of the screen so that the parameter item included in each group is displayed on the lower end 350.

Referring to FIG. 4B, the parameter item included in the General group may be a device model 351, a tool name 352, a connection type 353, a tool weight 354, and/or a center of gravity 355 as an exemplary embodiment. In the case of the device model, the work cell manager 300 may display the work cell items registered as the gripper stored in the master DB 600 in a pop-up form so that the user may easily select one of the registered gripper models. The tool name 352 may be freely set as the name easily recognizable by the user. If the gripper with the same device model is used in plural, it may be quite useful to set a separate distinguishable tool name for each gripper. The connection type 353 indicates how to connect the control signal by using a method. The tool weight 354 and the center of gravity 355 may be input by the user, but may also be acquired by the automatic measurement.

When the setting has been completed in the General group 341, the user may press the OK button 357 to store the setting, and the work cell manager 300 may store the setting when the OK button 357 has been pressed, and display the parameter items included in the input/output (I/O) group on the screen of the display 800.

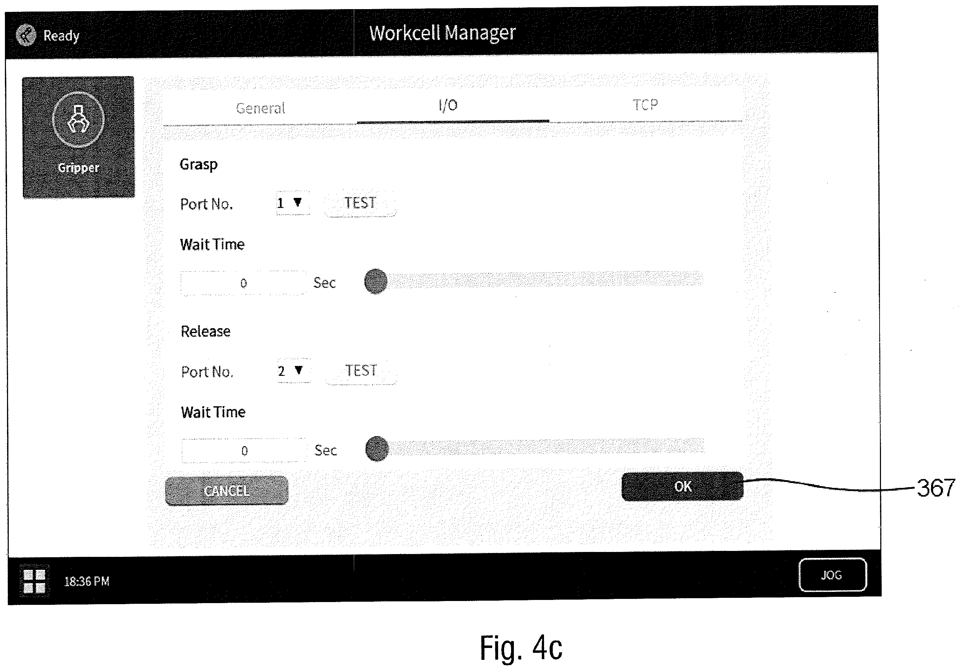

Referring to FIG. 4C, the parameter item included in the input/output (I/O) group may be a connection port corresponding to each command that the gripper may receive. In more detail, the gripper may receive two commands of Grasp and Release, and set the connection port corresponding to each command as the parameter item included in the input/output (I/O) group. As an example, the Grasp may be set to a port 1 and the Release may be set to a port 2. In order to instruct the gripper to grasp the target workpiece later after the setting as described above, it is possible if the recognizable signal (e.g., 'enable signal') is provided to the port 1. In the case of controlling the robot by using a Programmable Logic Controller (PLC), it is possible to set the connection port according to the contents programmed in the PLC, thereby preventing the reprogramming of the PLC, such that it is a very useful function. In the parameter item setting included in the input/output (I/O) group, a wait time for each command may be additionally set, and the wait time may indicate the time that the gripper takes to execute the command corresponding to its command when the command is input. That is, during the wait time, it is possible to indicate that another command may not be received because of performing the work by the command. Alternatively, it is possible to indicate the time required for the gripper to execute the command.

When the user presses the OK button 367 after having completed to input the setting information for the parameter item included in the input/output (I/O) group, the work cell manager 300 may store the setting and display the TCP group on the display.

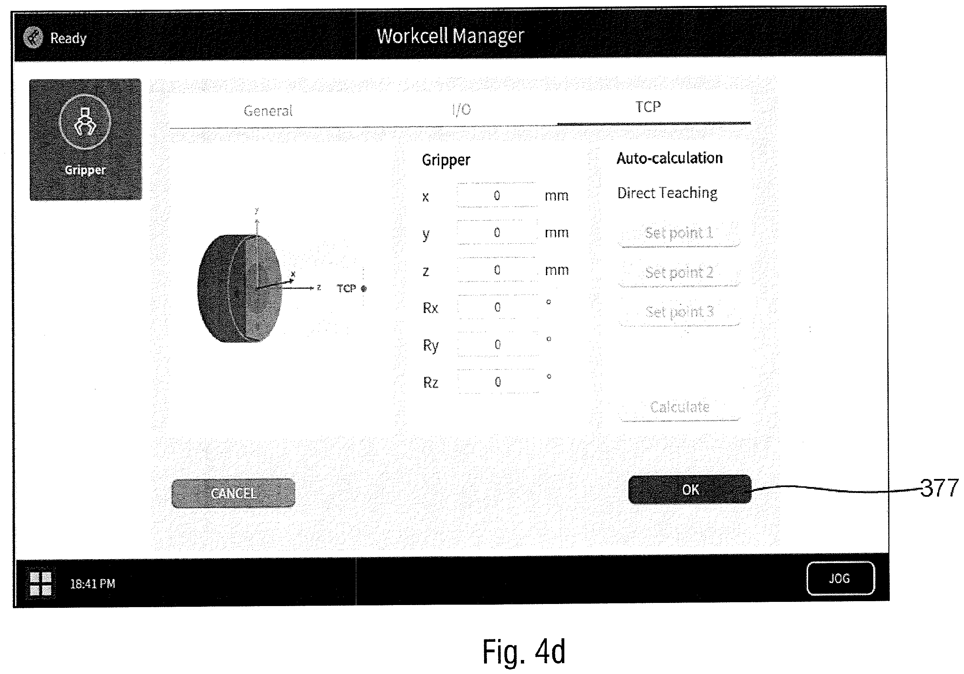

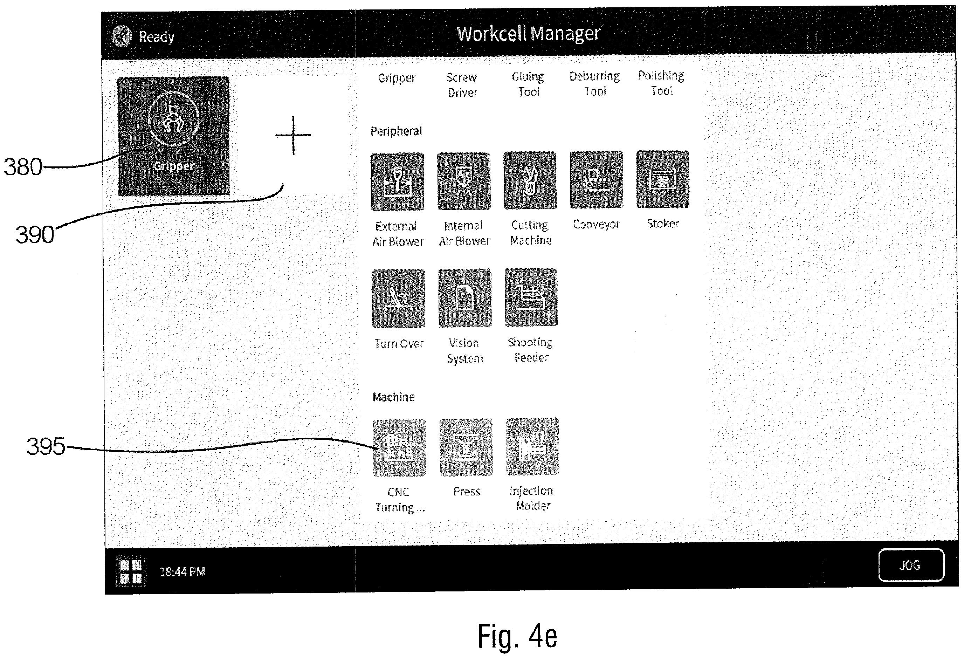

Referring to FIG. 4D, the parameter item included in the TCP group may be a coordinates and an angle indicating the Tool Center Point (TCP) of the gripper. The setting method may be directly input by the user through the input apparatus 900, but the work cell manager 300 may also calculate and input it automatically, or also input a coordinates point through direct teaching. When the user presses the OK button after having completed the setting, the work cell manager 300 may store the set parameter item and display the work cell item selection screen of the work cell manager 300 (FIG. 4E) on the display 800. In this case, the work cell manager 300 may display the work cell item 380, which has been previously selected and has completed the setting for the relevant parameter item, at one side of the screen of the display 800 to provide the user with the previously selected work cell item information.

If another work cell item, as an exemplary embodiment, the CNC is added, the user may select the CNC by pressing a + icon 390 again, and then an icon 395 corresponding to the CNC.

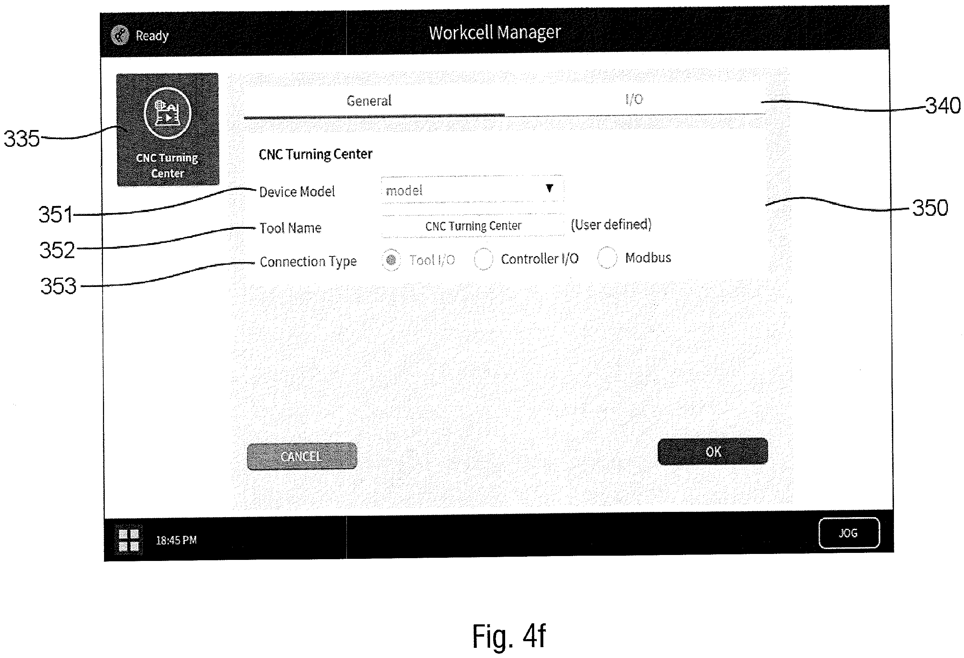

FIGS. 4F to 4H are diagrams showing the contents displayed on the screen of the display 800 for inputting and setting the parameter item of the CNC.

Referring to FIGS. 4F to 4H, the work cell manager 300 may display a CNC icon 335 at one corner of the screen of the display 800 in order to indicate that it is the CNC-relevant parameter setting. Further, the CNC-relevant parameter item may be divided into two groups of a General group and an input/output (I/O) group. The work cell manager 300 may display the group name (General, I/O) at the upper end 340 of the screen of the display 800 and display the parameter item included in each group at the lower end 350 in order to set the value of the parameter item included in each group. The user may press the group name at the upper end 340 of the screen so that the parameter item included in each group is displayed on the lower end 350.

Referring to FIG. 4F, in the case of the CNC, the parameter item included in the General group may be the device model 351, the tool name 352, and/or the connection type 353. In the case of the device model, the work cell manager 300 may display the work cell item registered as the CNC stored in the master DB 600 in a pop-up form so that the user may easily select one of the registered CNC models. The tool name 352 may be freely set the name easily recognizable by the user. If the CNC with the same device model is used in plural, it may be quite useful to set a separate distinguishable tool name for each CNC. The connection form 353 indicates how to connect the control signal by using a method. The user may press the OK button 357 to store the setting when the setting in the General group has been completed, and the work cell manager 300 may store the setting and display the parameter items included in the input/output (I/O) group on the screen of the display 800 when the OK button has been pressed.

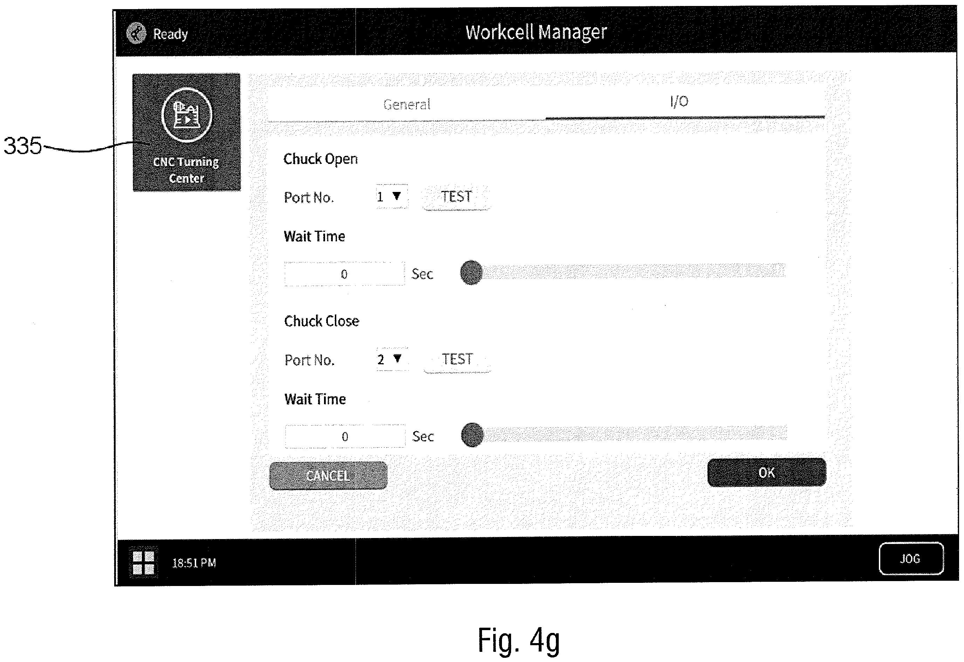

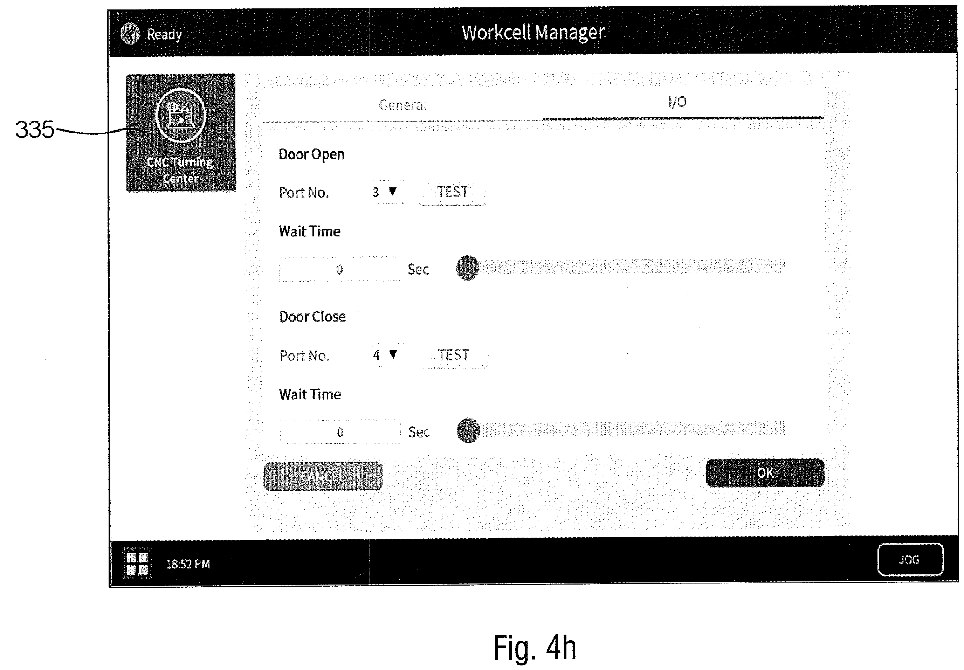

Referring to FIGS. 4G and 4H, the parameter item included in the input/output (I/O) group may be a connection port corresponding to each command that the CNC may receive. In more detail, the CNC may receive four commands of Chunk Open, Chunk Close, Door Open, and Door Close, and set the connection port corresponding to each command as the parameter item included in the input/output (I/O) group. In an example of FIGS. 4G and 4H, 1 is set as a connection port of Chunk Open, 2 is set as a connection port of Chunk Close, 3 is set as a connection port of Door Open, and 4 is set as a connection port of Door Close. After this setting, a recognizable signal (e.g., 'enable signal') is provided to the port 1 for the Chunk Open of the CNC later to issue the Chunk Open command. In setting the parameter item included in the input/output (I/O) group, the wait time for each command may be additionally set, and the wait time may indicate the time that the CNC takes to execute the command corresponding to its command when the command is input. That is, during the wait time, it is possible to indicate that another command may not be received because of performing the work by the command.

When the user presses the OK button after having completed input the setting information for the parameter item included in the input/output (I/O) group, the work cell manager 300 may store the setting and display the selection screen on the display 800 again.

As described above, when the work cell item to be used by the work cell manager 300 is selected and the parameter setting for the selected work cell item is completed, the work cell engine 400 may search the master skill relevant to the selected work cell item from the master DB 600, and generate the user skill by applying at least one parameter among the parameters of the selected work cell item to the searched master skill. For example, the work cell engine 400 may search the master skill relevant to the selected work cell item from the master DB 600, retrieve the master skill relevant to the selected work cell item, and apply at least one parameter among the parameters of the selected work cell item to the retrieved master skill.

Further, the work cell engine 400 may generate and recommend a task template, which is a time series set of the user skill based on the work cell item and the user skill stored in the user DB, and provide the progress route and posture of the movement-relevant command included in the user skill by utilizing the work cell item-relevant parameter stored in the user DB.

That is, the work cell engine 400 may include a skill engine, a template engine, and/or a path engine, and the skill engine may search the master skill relevant to the selected work cell item from the master DB 600 and generate the user skill by applying at least one parameter among the parameters of the selected work cell item to the searched maser skill, the template engine generates and recommends a task template, which is a time-series set of the user skill based on the work cell item and the user skill stored in the user DB, and the path engine provides the progress route and posture of the movement-relevant command included in the user skill by utilizing the parameter relevant to the work cell item stored in the user DB. The progress route and the posture at this time may mean the progress route and posture of the robot, which is the main subject of operation.

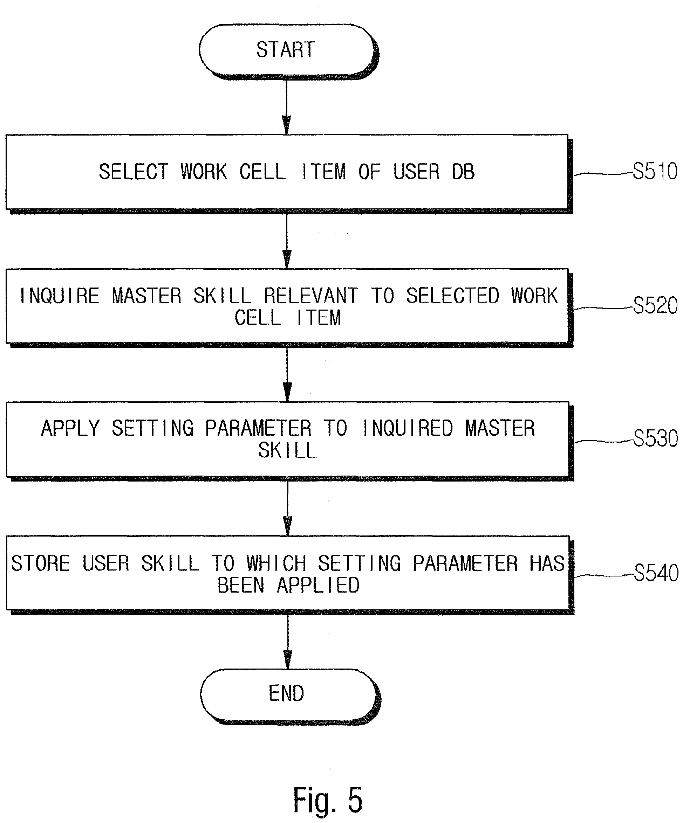

FIG. 5 is a flowchart briefly showing an operation of a skill engine according to an exemplary embodiment of the present disclosure.

The generation and the storage of the user skill according to the flowchart shown in FIG. 5 may be performed with respect to each work cell item or a combination of the work cell items stored in the work cell DB of the user DB 700, respectively.

Referring to FIG. 5, the skill engine may select the work cell item or a combination of the work cell items stored in the work cell DB of the user DB 700 by the work cell manager 300 (operation S510). Further, the skill engine may automatically search the master skill relevant to the selected work cell item or a combination of the work cell items from the skill DB of the master DB 600 (operation S520).

Further, at least one parameter among the parameters of the selected work cell item or combination of the work cell items stored in the work cell DB of the user DB 700 may be applied to the searched skill (operation S530), and stored in the skill DB of the user DB 700. The master skill stored in the master DB 600 according to the present disclosure may be simply a set of commands. That is, as shown in FIG. 2, it may be a simple set of commands such as move, open, move, pick, and move. However, the user skill to which the set parameter has been applied may be a set of specific commands that may be applied to the robot work. That is, for example, the set parameters, such as coordinates of the work environment such as moving from X coordinates to Y coordinate, opening 'first gripper,' moving from Y coordinates to Z coordinate, picking a workpiece A with the 'first gripper,' or moving from Z coordinates to W coordinate, and the tool name of the work cell item set in the work cell manager 300, are applied to the searched skill to constitute the skill as a set of the specific commands.

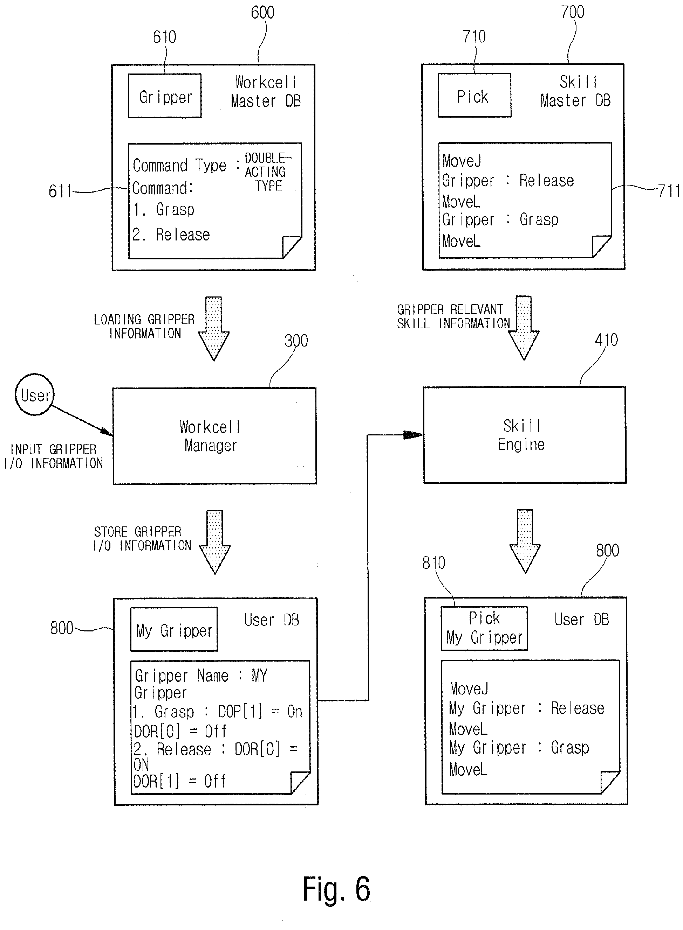

FIG. 6 is a diagram showing an exemplary embodiment in which the skill engine automatically generates the user skill.

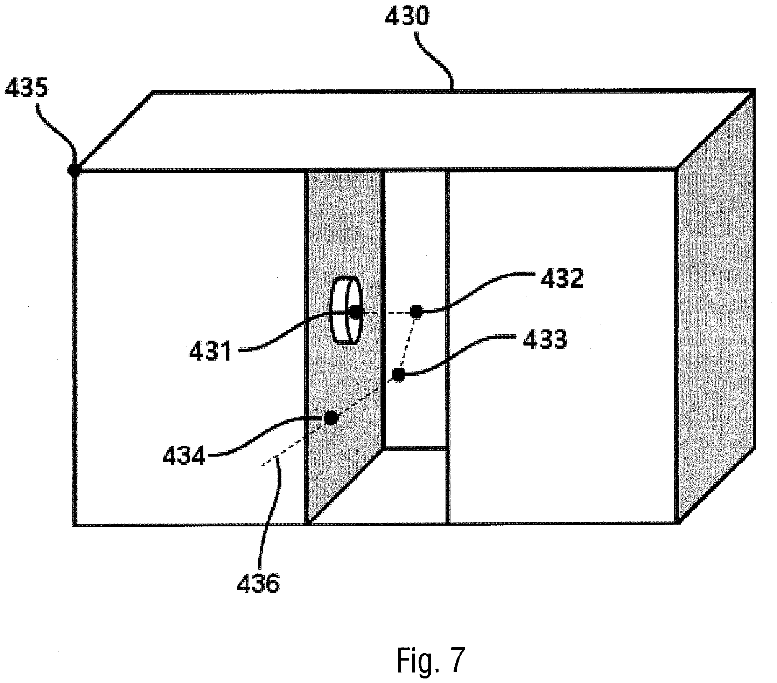

Referring to FIG. 6, a gripper 610, which is a work cell item, may be stored in the work cell DB of the master DB 600, and the master skill of 'Pick 710' may be stored in the skill DB of the master DB 600. Here, the gripper 610 may have 'Grasp' and 'Release', which are commands 611, as the relevant parameter. Further, the 'Pick 710' master skill may be composed of 'move, gripper open, move, gripper pick, move 711.' When the user selects the gripper 610 as the work cell item by using the work cell manager 300 and sets the gripper-relevant parameter, the selected work cell item may be stored in the work cell DB of the user DB 700 with the set parameter. In an example of FIG. 6, the name of the work cell item 620 stored in the user DB 700 is set to 'My Gripper,' and the input/output port for the command is also set. When the selected work cell item is stored in the user DB 700 with the set parameter, the skill engine 410 automatically searches the master skill (Pick in an exemplary embodiment of FIG. 6) relevant to the selected work cell item from the skill DB of the master DB 600, and automatically stores it in the skill DB of the user DB 700 as the user skill (Pick My Gripper 810 in an exemplary embodiment of FIG. 7) by coupling the set parameter of the selected work cell item (My Gripper in an exemplary embodiment of FIG. 7) with the searched master skill. At this time, if the coordinates information necessary for each command has been set, the coordinates information necessary for each command may be stored together. If it has not been set, the progress route and the posture information may be applied to be set as the coordinates information of the user skill through the teaching in the task builder 500 described later.

As described above, the skill engine may generate the user skill to store it in the skill DB of the user DB 700. Further, the skill engine may give priority to each of the generated user skills, and also set a user skill recommendation rule. That is, when the task builder 500, which will be described later, requests a skill recommendation in the task generation work of the user, it may recommend the skill to the user according to the set skill recommendation rule or priority.

The template engine may generate a task template, which is a time series set of user skills based on the work cell item and the user skill stored in the user DB 700. For this purpose, the template engine may search a general task template stored in the master DB 600 in connection with the work cell item or a combination of the work cell items stored in the user DB 700, and generate the task template for switching the master skill, which is present in the general task template, with the user skill stored in the user DB 700.

As an exemplary embodiment, a general task template relevant to moving a workpiece from an input side conveyor belt to an output side conveyor belt may be stored in the master DB 600. This task template may use two skills of 'Incoming feeder' and 'Outgoing feeder' relevant to the conveyor belt, and dispose the 'Incoming feeder' at the start position of the task and the 'Outgoing feeder' at the end position of the task. The template engine may search the above-described task template from the master DB 600, and generate a new task template using the user skill that has applied the position of the conveyor belt stored as the parameter of the work cell item to store it in the user DB 700.

Further, the template engine may generate the task template based on the task previously generated by the task builder 500 described later. The thus generated task template may be stored in the user DB 700.

The task template generated by the template engine may be provided for user's easy programming in the task builder 500 described later.

The path engine may provide the progress route and posture of the movement-relevant command included in the user skill by utilizing the parameter of the work cell item stored in the user DB 700. For this purpose, the path engine may read the parameter of the work cell item set in the work cell manager 300 and stored in the user DB 700 from the user DB 700. At this time, the read parameter may include a reference point of the selected work cell item and the relative position information and posture information of at least any one point of a turning point, an approach point, a way point, and an operation point based on the reference point. Further, the path engine may measure the position between the robot, which is the operation subject, and the reference point of the selected work cell item through the direct teaching or the indirect teaching, and based on the above, calculate the relative position information and posture information between the robot and at least any one point of the turning point, the approach point, the way point, and the operation point of the selected work cell item to automatically generate the progress route and posture of the movement-relevant command included in the user skill. The progress route and the posture at this time may mean the progress route and posture of the robot, which is the operation subject.

FIG. 7 is a diagram showing the function of the path engine in the CNC 430 according to an exemplary embodiment of the present disclosure.

Referring to FIG. 7, the CNC 430 is an apparatus for machining a workpiece, and is an apparatus having a door and for machining a workpiece in a state where a chuck in a space inside the door has held the workpiece. The robot collaborating with the CNC 430 picks the workpiece placed on the pallet to pass through the door to supply the workpiece so that the chuck may hold the workpiece. At this time, it is necessary to set a movement route 436 through which the TCP of the robot should progress so that the robot passes through the door to place the workpiece at the central position of the chuck. That is, it is necessary to teach the robot a turning point 434, a way point 433, an approach point 432, and an operation point 431 in the movement route of the TCP of the robot by using the direct teaching or the indirect teaching. Here, the turning point 434 is a way point for movement between the work cell items, and the robot may enter the work cell item through the turning point 434 of the work cell item. The way point 433 is a point that should be passed to go to the approach point 432 of the work cell item, and is not essential and may be an additional point, and there may be a plurality of way points. The operation point 431 means a point that the tool attached to the robot performs an operation within the skill. In an example of FIG. 7, after the gripper attached to the robot picks and moves the workpiece, the operation point 431 becomes a point that performs the 'release' operation, and for the CNC position, it may become the central point of the chuck for holding the workpiece. The approach point 432 may be a point through which it may finally pass for approaching the operation point 431.

In order to facilitate the above-described teaching, the above-described turning point 434, way point 433, approach point 432, and operation point 431 may be set as a parameter item when the CNC is registered as a work cell item. Further, the reference point 435 may be set as a parameter item. Further, the relative coordinates of the reference point 435 and the posture of the robot at each point may be set as a parameter value of each point. That is, the relative coordinates for the reference point 435 may set the coordinates for the turning point 434, the way point 433, the approach point 432, and the operation point 431, and angles for three (x, y, z) axes that indicate the direction of the TCP for setting the posture may be set. At this time, if the coordinates of the reference point 435 are set to (0, 0, 0) that is the origin on the three-dimensional coordinate, the relative coordinates for the turning point 434, the way point 433, the approach point 432, and the operation point 431 may be easily set. Further, the setting of the relative coordinates may be set together when the work cell register 100 registers the CNC as the work cell item to be stored in the master DB 600.

Further, when the work cell manager 300 selects the CNC of FIG. 7 as the work cell item to be used, and sets the reference point, which is a parameter of the selected work cell item, as the coordinates according to the position of the TCP of the robot or sets it as the relative coordinates for the reference point of the entire work area, the path engine may automatically calculate newly the coordinates of the turning point 434, the way point 433, the approach point 432, and the operation point 431 as the coordinates according to the position of the TCP of the robot or the coordinates according to the reference point of the entire work area to store the relevant parameter of the selected work cell item in the user DB 700. The coordinates and the posture of each point thus stored may be applied to determine the progress route and posture of the movement-relevant command of the user skill generated by the skill engine. As described above, it is possible to previously set the information on the movement route of the robot, thereby reducing the number of teaching points required for the actual teaching. That is, as described above, when the teaching for the reference point is executed, the coordinates for the turning point 434, the way point 433, the approach point 432, and the operation point 431 are automatically calculated, such that it is unnecessary to additionally perform the teaching for each point. Accordingly, it is possible to drastically reduce the load during the user's programming, and to greatly reduce the time required for programming as well.

The above-described skill engine, template engine, and path engine may provide various task templates and user skills upon the work in the task builder 500 for the user to program the work of the robot, and reduce the number of required teaching points, thereby considerably reducing the effort and the time required for user's robot programming.

The task builder 500 may generate a task to be performed by the robot based on the above-described user skill. That is, the task builder 500 may arrange one or more user skills in a time-series manner through an interface with the user, and receive the position information and posture information of the robot, which is the operation subject required when performing the arranged user skill, through the direct teaching or the indirect teaching to generate the task desired by the user.

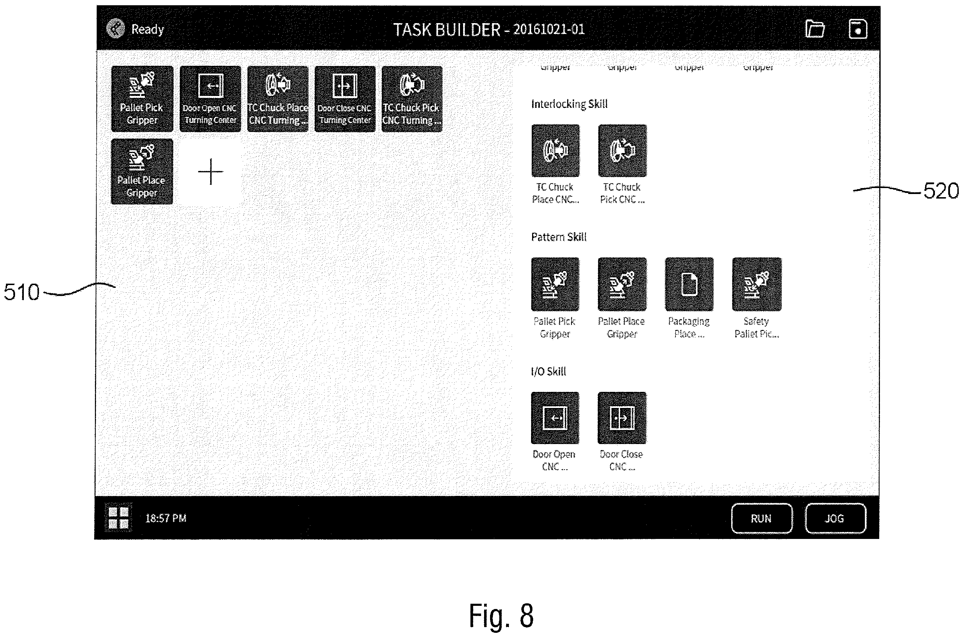

FIG. 8 is a diagram showing a procedure in which the task builder 500 according to an exemplary embodiment of the present disclosure generates a task.

Referring to FIG. 8, the task builder 500 may divide the screen of the display 800 into two screens, and one screen (hereinafter referred to as a task screen 510) may be used to display a task to be generated, and the other one screen (hereinafter referred to as a skill screen 520) may be used to display the user skill stored in the user DB 700. The user may generate the task by bringing the skill from the skill screen and disposing and connecting it on the task screen in a time series manner. As an example, the user may bring the user skills such as 'Pick palette, gripper,' 'Door open, CNC,' 'Place workpiece, CNC,' 'Door close, CNC,' 'Pick workpiece, CNC,' and 'Place palette, gripper' from the skill screen to dispose the task screen in a progress order to complete the task. At this time, the coordinates information or the posture information necessary for the user skill to operate may be previously set by the work cell engine as described above, or may be set by the user by using the direct teaching or the indirect teaching in the current operation.

That is, the user may select and combine the user skill provided by the task builder 500 to generate the task that the user wants to instruct the robot. The task builder 500 may generate a machine language program that the robot may comprehend by compiling the work generated by the user. The thus generated machine language program is downloaded to a control apparatus of the robot so that the robot may be operated according to the program.

As another method, the task builder 500 may receive the user skill and the task template generated and recommended by the work cell engine, and generate the task by using one task template selected by the user among the received task templates, or adding, deleting, or switching the user skill based on one task template selected by the user among the received task templates.

In an exemplary embodiment of FIG. 8, the user skill stored in the user DB 700 may be displayed on the skill screen, and at this time, the user skill displayed on the skill screen may be a user skill recommended by the work cell engine.

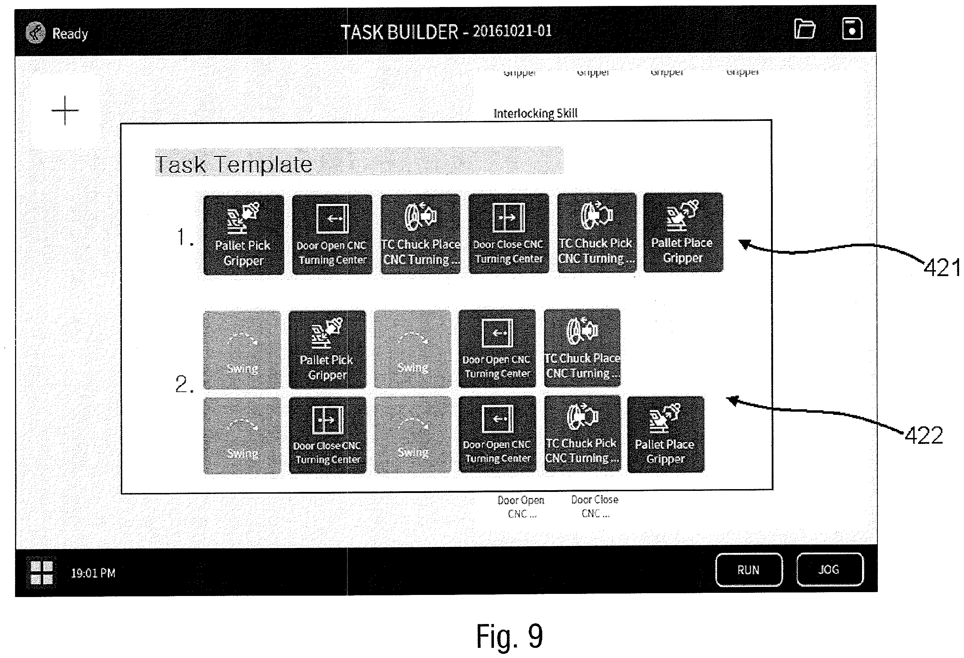

FIG. 9 is a diagram showing an example of the task template recommended by the template engine in the task builder 500.

Referring to FIG. 9, the template engine may generate the task template relevant to the work cell item set by the user through the work cell manager 300 to store it in the user DB 700. Further, the stored task template may be recommended upon the task programming through the task builder 500 of the user. As in an example of FIG. 9, it is possible to recommend a plurality of task templates 421, 422, and it is possible to constitute the task desired by the user based on its template when the user selects one of the recommended task templates. As an exemplary embodiment, the task template 421 of FIG. 8 may be selected, and then the task template 421 may be displayed on the task screen.

Hereinafter, modification may be made to constitute the desired task based on the task template shown in the task screen.

For example, when the position of the target workpiece of the Pick skill is changed, the parameter of the work cell item may be changed by using the work cell manager 300. As another method, the parameter of the Pick skill in the task template may also be changed directly in the task builder.

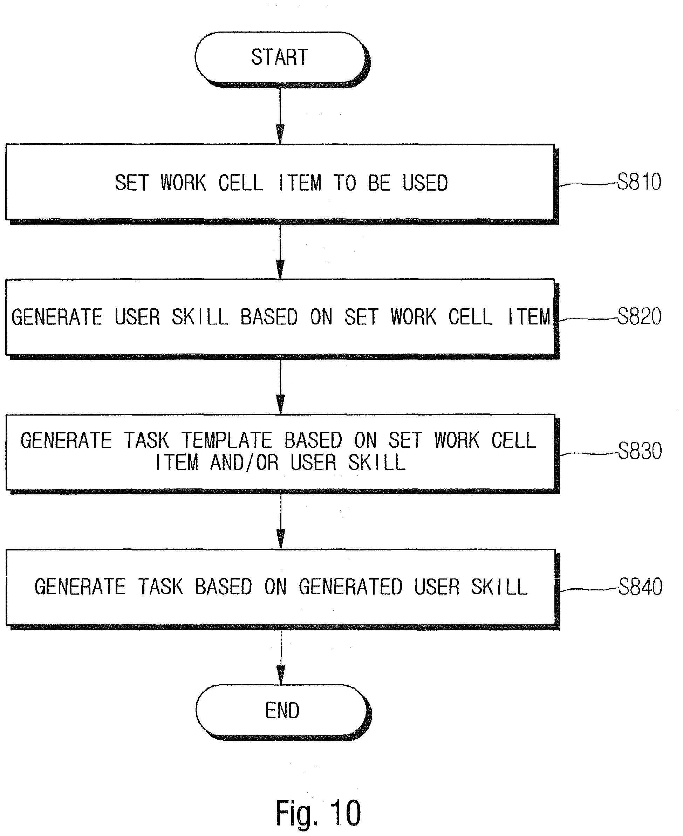

FIG. 10 is a flowchart showing a skill-based robot programming method according to an exemplary embodiment of the present disclosure.

In order for the user to perform the robot programming, the work cell item and the relevant master skill should be first stored in the master DB 600. For this purpose, before the user purchases the robot programming apparatus, as many work cell items and relevant master skills as possible are registered by the seller by using the work cell register 100 and the skill register 200 and stored in the master DB 600. The user may perform the robot programming in a state where the work cell item and the master skill have been basically stored in the master DB 600.

First, the user may select the work cell item to be used through the work cell manager 300 (operation S810), and also set a parameter value relevant to the work cell item to be used.

The work cell engine 400 may generate a user skill based on the selected work cell item and the set parameter (operation S820), and further, generate a task template based on the additionally selected work cell item and/or the generated user skill (operation S830) to store it in the user DB 700. At this time, additionally, information on the route to which the robot that is an operation subject moves in connection with each work cell item may also be generated to be stored as a parameter.

The user may generate the task to be worked by the robot based on the user skill and/or the task template generated by the work cell engine 400 while interfacing with the task builder 500 (operation S840). Here, the task may be configured by disposing a plurality of user skills in a work order.

When the generation of the task is completed, the operation of the task may be verified through simulation, and if it is verified, it may be executed by the robot.

Hereinafter, each of the above-mentioned operations will be described in more detail.

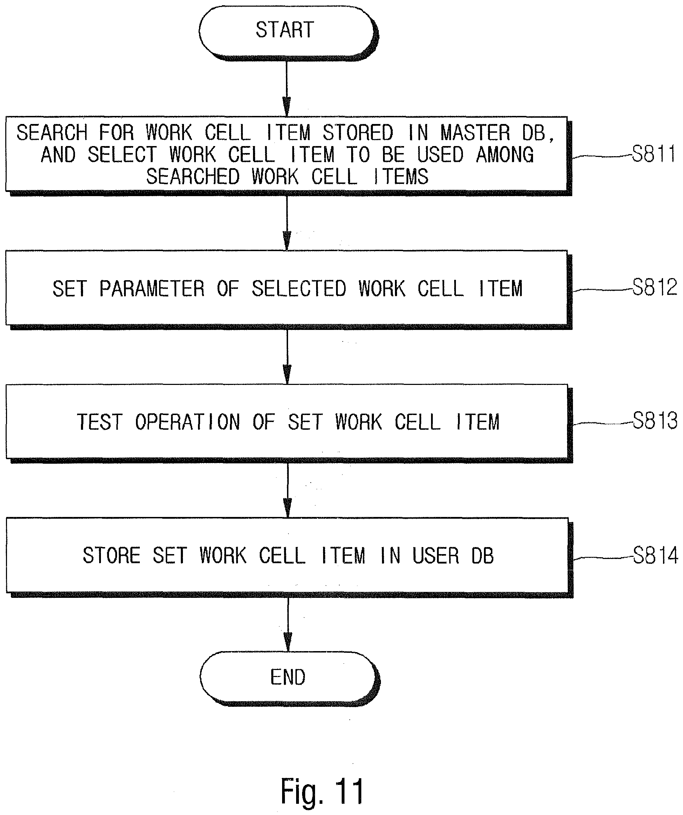

FIG. 11 is a flowchart for the skill-based robot programming apparatus according to an exemplary embodiment of the present disclosure to set the work cell item to be used.

Referring to FIG. 11, the skill-based robot programming apparatus may search for the work cell item stored in the master DB 600 as described above for selecting the work cell item to be used (operation S810), and select the work cell item to be used among the searched work cell items (operation S811). Further, the skill-based robot programming apparatus may set the relevant parameter of the selected work cell item (operation S812), additionally test an operation of the selected and set work cell item for verifying the setting (operation S813), and modify the parameter setting when the test fails. Further, the selected work cell item in which the relevant parameter has been set may be stored in the user DB (operation S814). At this time, the parameter relevant to the work cell may include at least one among the category of the work cell item, the type of the work cell item, the model of the work cell item, the name, weight, center of gravity, TCP, volume, reference point, turning point, approach point, way point, and operation point of the work cell item, and the posture information, speed, acceleration, connection type, connection port, and wait time of the respective points.

Here, the path engine of the work cell engine 400 may additionally generate automatically the progress route and posture of a movement-relevant command included in the user skill. That is, the work cell item includes at least one point of the reference point, the turning point, the approach point, the way point, and the operation point as parameters, and each point may have relative position information with respect to the reference point as a parameter value. Further, the path engine may measure the position between the reference point of the robot, which is an operation subject, and the reference point of the selected work cell item through direct teaching or indirect teaching, and based on the above, automatically generate the progress route and posture of a movement-relevant command included in the user skill by calculating the relative position information and posture information between the reference point of the robot and at least one point among the turning point, the approach point, the way point, and the operation point of the selected work cell item. Here, the reference point of the robot may also be a fixed point at the base of the robot, and may also be a TCP point of the robot.

The above-mentioned description will be explained by using the example of FIG. 7.

The CNC of FIG. 7 may be stored in the master DB 600 as a work cell item. At this time, the work cell item may have a reference point, a turning point, an approach point, a way point, and an operation point as parameters, and a value of each parameter may be previously input according to the specification of the CNC when being registered by the work cell register 100. That is, the coordinate values in which the reference point is (0,0,0), the turning point is (100, -50, -10), the way point is (120, -50, 0), the approach point is (120, -50, 20), and the operation point is (100, -50, 20) may be previously input. Here, the turning point, the approach point, the way point, and the operation point may be relative coordinates with respect to the reference point. Further, the posture to be taken by the robot at each point may also be stored previously.

Further, the work cell manager 300 may select the CNC as the work cell item to be used, and set the coordinates of the reference point of the selected work cell item by the indirect teaching or the direct teaching. As an example, the coordinates of the reference point may be set to (10, 20, 30). The coordinates of the reference point may also be coordinates based on the fixed point at the base of the robot, or may also be coordinates based on the TCP point of the robot. As described above, when the coordinates of the reference point are set, the path engine may change the parameter values of the turning point, the approach point, the way point, and the operation point based on the coordinates of the reference point. That is, the turning point may be changed to (110, -30, 20), the way point may be changed to (130, -30, 30), the approach point may be changed to (130, -30, 50), and the operation point may be changed to (110, -30, 50), by the path engine, to be stored in the user DB 700.

Referring to FIG. 8, the relevant user skill may be a 'Place workpiece ' for holding the workpiece on the chuck, which is a skill for disposing the held workpiece on the palette so that the chuck may hold the workpiece. This user skill may be configured by a plurality of movement commands and at this time, the coordinates to be moved by each movement command may be automatically generated by only one-time teaching for the reference point by using the parameter set in the selected work cell item.

For generating the user skill, when the work cell manager 300 selects the work cell item, the work cell engine 400 of the skill-based robot programming apparatus may search the master skill relevant to the selected work cell item from the master DB 600, and generate the user skill by applying at least one parameter among the parameters of the selected work cell item to the master skill relevant to the selected work cell item. At this time, when setting the parameter of the work cell item selected by the work cell manager 300, the work cell engine 400 may generate the user skill by applying at least one parameter among the parameters of the work cell item set by the user to the master skill relevant to the selected work cell item.

When the user skill includes a movement-relevant command, the progress route and posture of the movement-relevant command included in the user skill may be automatically generated based on the turning point, the approach point, the way point, and the operation point, which have been set as parameters of the selected work cell item as described above. The user skill thus generated may be stored in the skill DB of the user DB 700.

After the work cell item to be used is selected by using the work cell manager 300, the relevant parameter is set, and the work cell engine 400 automatically generates the relevant user skill and/or task template, the user may generate the task based on the user skill by using the task builder 500 (operation S840). In the generating the task, the task builder 500 may display the user skill stored in the user DB 700 on the display 800 in the form of a graphic (e.g., an icon or a directory form) so that the user generates the task that the robot should perform by a simple work of selecting and combining the necessary user skill. However, in order to teach the movement of the robot in each user skill, it is necessary to inform movement route information such as a turning point, a way point, an approach point, and an operation point between the respective user skills. This may be informed by various methods including an indirect teaching method using a teaching pendant or a direct teaching method of informing coordinates by directly moving the robot, etc.

As described above, since the robot programming apparatus provided in the present disclosure may apply the movement route information to the user skill in advance by using the path engine, a separate teaching work is not required at the time of generating the task or it is possible only with minimal teaching. That is, as an example, if there is no change in the coordinates of the reference point of the work cell item previously set by the work cell manager 300, that is, the relative coordinates between the robot and the coordinates of the reference point, it is possible to use it without any teaching work at all, and if there is a change in the coordinates of the reference point, only the reference point may be taught again and the remaining points may be automatically calculated again by the path engine and applied to the user skill, thereby minimizing the number of teaching points.

At this time, the robot programming apparatus may additionally provide the task template generated through the above-described template engine to the user in order to make the generation of the task of the user easier. Then, the user may use it as it is by selecting one of the provided templates, or select one of the provided task templates, and generate a new task by further adding the user skill to the selected task template, or deleting, switching, or changing the user skill included in the selected task template.

The robot programming apparatus and method according to the present disclosure may provide the user with various methods that may simplify the user's work so that even a general user, rather than an expert, may perform the robot programming easily and quickly enough.

Further, the robot programming apparatus according to the present disclosure may perform the work of registering the work cell item and the relevant parameter and the work of generating the skill based on the registered work cell item in advance by the expert, store the work cell item and the master skill in the master DB, and then sell the robot to the user, and use the separation policy stored in the user DB by automatically changing the work cell item and the master skill stored in the master DB into the version for user when the actual user inputs the robot work contents and the work environment, thereby omitting a portion requiring a lot of effort and time upon the robot programming from the user position.

In one or more exemplary embodiments, the functions described may be implemented in hardware, software, firmware, or any combination thereof. If implemented in software, these functions may be stored or transmitted as one or more commands or codes on a computer-readable medium. The computer-readable medium includes both a communication medium and a computer storage medium including any medium that facilitates transfer of a computer program from one place to another place. The storage medium may be any available media accessible by a computer. As an example, not limitation, such computer-readable medium may include RAM, ROM, EEPROM, CD-ROM or other optical disk storage, a magnetic disk storage or other magnetic storage devices, or any other computer-readable medium used to store or transfer the desired program code in the form of command or data structure and accessible by the computer. Further, any connection is properly referred to as a computer-readable medium. For example, if the software is transmitted from a web site, a server, or other remote source by using a coaxial cable, a fiber optic cable, a twisted pair cable, a digital subscriber line (DSL), or infrared rays, wireless technologies such as radio and ultra-high frequency, the coaxial cable, the fiber optic cable, the twisted pair cable, the DSL, or the infrared rays, the wireless technologies such as radio and ultra-high frequency are included in the definition of medium. The disk and the disc as used herein include a compact disc (CD), a laser disc, an optical disc, a digital versatile disc (DVD), a floppy disc and a Blu-ray disc, and the disks generally reproduce data magnetically, while the discs reproduce data optically by a laser. Combinations of the above should also be included within the scope of the computer readable medium.

When embodiments are implemented by a program code or code segments, the code segment may be recognized as indicating a procedure, a function, a subprogram, a program, a routine, a subroutine, a module, a software package, a class, or commands, data structure, or any combination of the program commands. The code segment may be connected to another code segment or a hardware circuit by transferring and/or receiving information, data, argument, parameter or memory contents. The information, the argument, the parameter, the data, etc. may be transferred, sent, or transmitted by using any suitable means including memory sharing, message forwarding, token forwarding, network sending, etc. Additionally, in some aspects, steps and/or operations of a method or an algorithm may be resided on one of the codes and/or commands or any combination or a set thereof on a machine readable medium and/or a computer readable medium that may be integrated into a computer program product.

In a software implementation, the technologies described herein may be implemented by modules (e.g., procedures, functions, etc.) for performing the functions described herein. The software codes may be stored in memory units and executed by processors. The memory unit may also be implemented within the processor and implemented outside the processor, and in this case, the memory unit may be communicatively coupled to the processor by various means as known.

In a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontroller, microprocessors, other electronic units designed to perform the functions described herein, or a combination thereof.

What has been described above includes examples of one or more embodiments. It is, of course, not possible to describe all possible combinations of components or methods for purposes of describing the above-described embodiments, but those skilled in the art may recognize that many additional combinations and substitutions of various embodiments are possible. Accordingly, the described embodiments include all alternatives, transformations, and modifications that fall within the spirit and scope of the appended claims. Further, to the extent that the term "comprises" is used in the detailed description or the claims, such terms are intended to be inclusive in a manner similar to "consisting" as the term "consisting" is construed when used as a transitional word in the claims.

As used herein, the term "infer" or "inference" generally refers to a process of determining or inferring states of a system, environment, and/or a user from a set of observations captured by events and/or data. The inference may be used to identify a specific situation or operation, or may generate a probability distribution for the states, for example. The inference may be probabilistic, that is, computation of the probability distribution for corresponding states based on consideration of data and events. The inference may also refer to technologies used to constitute higher level events from a set of events and/or data. This inference infers new events or operations from a set of observed events and/or stored event data, whether the events are closely correlated temporally, and whether the events and the data come from one or several events and data sources.

Further, as used in this application, the terms "component," "module," "system," etc. are not limited thereto, but include computer-relevant entities such as hardware, firmware, a combination of hardware and software, software or executing software. For example, a component is not limited thereto, but may be a process executing on a processor, the processor, an object, an executable execution thread, a program, and/or a computer. As an example, both the application driving on an operation device and the operation device may be components. One or more components may reside within a process and/or an execution thread, and the components may also be centralized on one computer and/or also distributed between two or more computers. Further, these components may also be executed from various computer-readable media having stored various data structures. The components may be communicated by a local and/or remote process, for example, by a signal having one or more data packets (e.g., data from a local system, another component of a distribution system and/or any component interacting with other systems by a signal via a network such as the internet).

## Claims

1. A skill-based robot programming apparatus for programming a robot, comprising:
a master DB for storing a work cell item comprising a robot or a peripheral and having a relevant parameter and a master skill, the master skill being a set of commands for driving the work cell item;
a work cell manager for selecting a work cell item to be used among the work cell items stored in the master DB, and inputting a parameter of the selected work cell item;
a work cell engine for searching the master skill relevant to the selected work cell item from the master DB, and generating a user skill by applying at least one parameter among the parameters of the selected work cell item to the searched master skill;
a user DB for storing the selected work cell item and the user skill; and
a task builder for generating a task that the robot should work based on the user skill.

2. The skill-based robot programming apparatus of claim 1, further comprising
a work cell register for registering the work cell item comprising the robot or the peripheral and having the relevant parameter and storing the master DB; and
a skill register for generating or editing the master skill by using the work cell item stored in the master DB, and storing the master skill in the master DB.

3. The skill-based robot programming apparatus of claim 1 or claim 2,
wherein the parameter of the work cell item comprises at least any one among the category of the work cell item, the type of the work cell item, the model of the work cell item, the name, weight, center of gravity, tool center point (TCP), volume, reference point, turning point, approach point, way point, operation point of the work cell item, and the posture information, speed, acceleration, connection type, connection port, and wait time of the respective points, and
wherein the item of the parameter is set by the work cell register for registering the work cell item, and the input of the parameter is performed by at least any one among the work cell register, the work cell manager, and the task builder.

4. The skill-based robot programming apparatus of claim 1 or claim 2,
wherein the work cell manager searches the work cell item stored in the master DB so that a user may select the work cell item to be used, and
provides a screen so that the user may input the parameter of the selected work cell item, when the user selects the work cell item to be used.

5. The skill-based robot programming apparatus of claim 1 or claim 2,
wherein the work cell engine comprises
a skill engine for searching the maser skill relevant to the selected work cell item among the master skills stored in the master DB, and generating the user skill by providing at least some parameters of the parameters of the selected work cell item to the searched master skill; and
a template engine for generating and recommending a task template, which is a set of the user skills, based on the work cell item and the user skill stored in the user DB.

6. The skill-based robot programming apparatus of claim 5,
wherein the task builder receives the user skill and the task template generated and recommended by the work cell engine, and
wherein the user generates the task by using it as it is by selecting one of the provided task templates, or combining the provided user skills without using the provided task template, or adding the user skill to the selected task template, or deleting, switching, or changing the user skill comprised in the selected task template by selecting one of the provided task templates.

7. The skill-based robot programming apparatus of claim 5,
wherein the task builder combines one or more user skills according to a work order, and generates the task by receiving the position information and posture information of the robot, which is an operation subject, required when performing the one or more user skills through direct teaching or indirect teaching.

8. The skill-based robot programming apparatus of claim 5,
wherein the work cell engine further comprises a path engine for providing the progress route and posture of a movement-relevant command comprised in the user skill by utilizing the parameter of the work cell item.

9. The skill-based robot programming apparatus of claim 8,
wherein the path engine reads the parameter of the selected work cell item, the parameter comprising reference point information of the selected work cell item, and the position information and posture information of at least any one point among a turning point, an approach point, a way point, and an operation point with respect to the reference point, and
automatically generates the progress route and posture of the movement-relevant command comprised in the user skill by measuring the position between the robot that is an operation subject and the reference point of the selected work cell item through direct teaching or indirect teaching to calculate the relative position information and posture information between the robot and at least any one point among the turning point, the approach point, the way point, and the operation point of the selected work cell item.

10. A skill-based robot programming method using a skill-based robot programming apparatus for programming a robot, comprising:
setting a work cell item to be used among the work cell items comprising a robot or a peripheral and having a relevant parameter;
generating a user skill based on the set work cell item; and
generating a task that the robot should work based on the user skill.

11. The skill-based robot programming method of claim 10,
wherein the setting the work cell item to be used comprises
searching for the work cell item stored in a master DB, and selecting the work cell item to be used among the searched work cell items;
inputting a parameter of the selected work cell item; and
storing the selected work cell item and the set parameter in a user DB.

12. The skill-based robot programming method of claim 11, further comprising generating a task template capable of recommending upon robot programming of a user based on the work cell item and the user skill stored in the user DB.

13. The skill-based robot programming method of claim 11,
wherein the setting the work cell item to be used further comprises testing an operation of the selected work cell item after the inputting the parameter of the selected work cell item.

14. The skill-based robot programming method of claim 10 or claim 11,
wherein the generating the user skill based on the setting of the work cell item to be used comprises
searching a master skill relevant to the selected work cell item from a master DB; and
generating a user skill by applying at least one of the parameters of the selected work cell item to the master skill relevant to the work cell item.

15. The skill-based robot programming method of claim 11,
wherein the parameter relevant to the selected work cell item comprises at least one among the category of the work cell item, the type of the work cell item, the model of the work cell item, the name, weight, center of gravity, TCP, volume, reference point, turning point, approach point, way point, operation point of the work cell item, and the posture information, speed, acceleration, connection type, connection port, and wait time of the respective points.

16. The skill-based robot programming method of claim 11,
wherein the parameter of the selected work cell item comprises a reference point and at least any one among a turning point, an approach point, a way point, and an operation point with respect to the reference point,
wherein the inputting the parameter of the selected work cell item comprises setting the position information of the reference point by measuring the position between the robot, which is an operation subject, and the reference point of the selected work cell item through direct teaching or indirect teaching; and
setting the relative position information and posture information between at least any one point among the turning point, the approach point, the way point, and the operation point and the robot by calculating the relative position information and the posture information between the robot and at least any one point among the turning point, the approach point, the way point, and the operation point of the selected work cell item based on the position information of the reference point set by a path engine, and
wherein the generating the user skill based on the selected work cell item comprises automatically generating the progress route and posture of a movement-relevant command comprised in the user skill based on the relative position information and the posture information between at least any one point among the set turning point, approach point, way point, and operation point and the robot.

17. The skill-based robot programming method of claim 12,
wherein the generating the task that the robot should work based on the user skill comprises
generating the task by using it as it is by selecting one of the task templates, or combining the user skills without using the task template, or adding the user skill to the selected task template, or deleting, switching, or changing the user skill comprised in the selected task template by selecting one of the task templates.

18. The skill-based robot programming method of claim 17,
wherein the task is configured by arranging a plurality of user skills in a work order.

19. A computer program stored in a computer-readable recording medium for executing the method of claim 10 or claim 11.
